# EUROPÄISCHE PATENTANMELDUNG

(11) **EP 4 818 568 A1**
(43) Veröffentlichungstag der Anmeldung: **07.10.2026**
(21) Anmeldenummer: 26167124.2
(22) Anmeldetag: 24.03.2026
(51) Int. Cl.: F17C 5/06, F17C 11/00, B01D 53/047

(54) **VERFAHREN ZUM BEFÜLLEN EINES FLUIDSPEICHERS, FLUIDABFÜHRVORRICHTUNG FÜR EIN FLUID ODER FLUIDGEMISCH UND ZUGEHÖRIGES SYSTEM**

(30) Priorität: 04.04.2025 DE 102025113259
(71) Anmelder: Langenstein & Schemann GmbH, 96450 Coburg (DE)
(72) Erfinder: Herdan, Friedrich, 96450 Coburg (DE); Bauersachs, Lothar, 96279 Weidhausen (DE); Barnickel, Harald, 96450 Coburg (DE)
(74) Vertreter: Meissner Bolte Nürnberg

(57) **Zusammenfassung**

Die Erfindung betrifft ein Verfahren zum Befüllen wenigstens eines Fluidspeichers, eine Fluidabführvorrichtung (2) für ein Fluid oder Fluidgemisch, insbesondere für ein in einem Fluidspeicher (9) gespeichertes Biogasgemisch und ein System umfassend eine Fluidabführvorrichtung (2) und einen ersten Fluidspeicher (3). Die Fluidabführvorrichtung (2) umfasst eine Zuleitung (20), wenigstens eine Ausleitung (29), eine Steuereinheit (27) und eine Messeinheit (24) zur Erfassung von Messwerten einer oder mehrerer der folgenden Messgrößen umfasst: Druck innerhalb der Zuleitung (20) ; Temperatur innerhalb der Zuleitung (20), Massenstrom durch die Fluidabführvorrichtung (2); und Fluidkonzentration innerhalb der Zuleitung (20).

## Beschreibung

Die Erfindung betrifft ein Verfahren zum Befüllen eines Fluidspeichers, eine Fluidabführvorrichtung für ein Fluid oder Fluidgemisch, insbesondere für ein in einem Fluidspeicher gespeichertes Biogasgemisch und ein zugehöriges System umfassend eine Fluidabführvorrichtung, einen ersten Fluidspeicher und einen zweiten Fluidspeicher.

Unter Biogas wird vorstehend und nachfolgend ein Gas verstanden, das durch Vergärung von Biomasse entsteht, beispielsweise in einer Biogasanlage wie etwa als Teil einer Mülldeponie, einer Kläranlage oder eines landwirtschaftlichen Betriebs. Biogas kann beispielsweise zur Versorgung von Nahwärmesystemen, Kraftwerken oder von Verbrennungsmotoren in Fahrzeugen verwendet werden. Allerdings hat Biogas im Durchschnitt nur einen Heizwert von 60 % im Vergleich zu normalem Erdgas in Pipelinequalität. Zur Produktion von hochwertigem, pipelinefähigem Biomethan wird Biogas beispielsweise in Pipelines gesammelt und zu einer Biomethan-Aufbereitungsanlage (alternativ auch bezeichenbar als RNG-Anlage) gepumpt, wo es in großen Reinigungsanlagen in mehreren Schritten verarbeitet wird. Der kostenintensivste Schritt ist die Trennung von CH₄ und CO₂.

Viele landwirtschaftliche Biogaserzeuger befinden sich jedoch in abgelegenen Gebieten, in denen es keine Pipelines zu einer Biomethan-Aufbereitungsanlage gibt. Aus diesem Grund sind Biogaserzeuger auf Verfahren angewiesen, mittels derer sich Biogas zu einer Biomethan-Aufbereitungsanlage transportieren lässt.

Eine Möglichkeit zum Transport von Biogas besteht darin, mobile Tanks, beispielsweise ausgebildet als Tank in einem Tankfahrzeug oder als Tankanhänger für ein Kraftfahrzeug, mit Biogas zu befüllen und anschließend zu einer Biomethan-Aufbereitungsanlage zu transportieren. Ein solcher mobiler Tank kann etwa ein Kompressionsspeicher oder ein Fluid-Adsorptionsspeicher sein.

In Fluid-Adsorptionsspeichern werden Fluide, insbesondere Biogas, beispielsweise an auf Kohlenstoff basierenden Adsorptionsmaterialien, den sogenannten Adsorbentien (Singular: Adsorbens), adsorbiert. Bei derartigen Adsorptionsmaterialien oder Adsorbentien handelt es sich beispielsweise um Aktivkohle, periodisch mesoporöses Organosiliziumdioxid, kontrollierbar poröse Gläser, mesoporöses Siliziumdioxid, kohlenstoffmesoporöses Korea, monolithischer Kohlenstoff, insbesondere monolithischer nanoporöser Kohlenstoff, oder monomodal mikroporöse kohlenstoffbasierte Adsorbentien.

Unter Adsorption wird vorgehend und nachfolgend die Anlagerung von Gasen, Molekülen oder gelösten Stoffen an der Grenzfläche einer festen oder flüssigen Phase, dem Adsorptionsmaterial oder dem Adsorbens, verstanden. Ein Molekül eines Fluids, das nicht vom Adsorptionsmaterial adsorbiert wird, sondern in der fluiden Bulkphase verbleibt, wird als Adsorptiv bezeichnet. Die Moleküle des Fluids, die an den Adsorbentien, also am Adsorptionsmaterial, gebunden sind, werden als Adsorpt bezeichnet. Das Adsorbens und das Adsorpt werden unter dem Begriff Adsorbat zusammengefasst.

Die Entnahme der in Adsorptionsspeichern gespeicherten Fluide erfolgt zumindest teilweise über Desorption. Hierbei handelt es sich um die Rückreaktion der Adsorption. Bei der Desorption wird das an das Adsorptionsmaterial adsorbierte Gas, die adsorbierten Moleküle oder die adsorbierten gelösten Stoffe unter Aufbringung von Energie vom Adsorptionsmaterial losgelöst.

Adsorptionsmaterialien sind oft sehr porös, das heißt sie besitzen eine hohe spezifische Oberfläche. Dies geht häufig mit einer eingeschränkten thermischen Leitfähigkeit einher. Die Adsorption eines Moleküls ist typischerweise ein exothermer Vorgang, bei dem eine Adsorptionsenthalpie freigesetzt wird. In anderen Worten wird das Adsorptionsmaterial durch Adsorption üblicherweise erwärmt. Eine Erwärmung des Adsorptionsmaterials kann jedoch Desorption im Adsorptionsmaterial begünstigen. In anderen Worten kann eine Erwärmung des Adsorptionsmaterials die Adsorptionsfähigkeit des Adsorptionsmaterials verringern. Analoges gilt auch für die Desorption. Die Desorption eines Moleküls ist typischerweise ein endothermer Vorgang, bei dem dem Adsorptionsmaterial eine Desorptionsenthalpie entzogen wird. In anderen Worten wird das Adsorptionsmaterial durch Desorption üblicherweise abgekühlt. Eine Abkühlung des Adsorptionsmaterials kann jedoch einer Desorption im Adsorptionsmaterial entgegenwirken. In anderen Worten kann eine Abkühlung des Adsorptionsmaterials die Adsorptionsfähigkeit des Adsorptionsmaterials vergrößern.

Ad- und Desorptionsprozesse sind für den Prozess des Speicherns von Fluiden in Adsorptionsspeichern sowie für den Prozess der Entnahme von Fluiden aus Adsorptionsspeichern von Bedeutung. Für eine schnelle Entleerung des Adsorptionsspeichers kann im Moment der Entnahme von Fluiden aus Adsorptionsspeichern eine geringe Adsorptionsfähigkeit oder Adsorptivität der Adsorbentien für die entsprechenden Adsorpte vorteilhaft sein, wohingegen für eine schnelle Befüllung des Adsorptionsspeichers im Moment der Speicherung von Fluiden in Adsorptionsspeichern eine hohe Adsorptionsfähigkeit oder Adsorptivität der Adsorbentien für die entsprechenden Adsorpte vorteilhaft sein kann. Die Ad- und Desorptionsprozesse sind neben der Adsorptivität, insbesondere selektiven Adsorptivität für die jeweiligen Adsorpte, in der Regel auch von der Systemtemperatur und dem Partialdruck bzw. der Konzentration des Adsorptivs oder der Adsorptive abhängig.

Wie bereits oben dargelegt, können vorangehende Ad- und Desorptionsprozesse diejenige Temperatur, die während nachfolgender Ad- und Desorptionsprozessen im Adsorptionsmaterial eines Fluid-Adsorptionsspeichers vorliegt, beeinflussen. Zudem verändern sich die Partialdrücke in Fluid-Adsorptionsspeichern während der Befüllung oder Entleerung der Fluid-Adsorptionsspeicher. Das in einer bestimmten Zeitdauer aus einem Fluid-Adsorptionsspeicher maximal entnehmbare Fluidvolumen oder das in einer bestimmten Zeitdauer in einen Fluid-Adsorptionsspeicher maximal einfüllbare Fluidvolumen ist nicht nur von den Temperatur- und Druckverhältnissen zu Beginn dieser jeweiligen Vorgänge abhängig, sondern auch von der zeitlichen Veränderung der Temperatur- und Druckverhältnisse über den Entnahme- bzw. Füllungsvorgang hinweg, i.e. von dem zeitlichen Temperaturgradienten und dem zeitlichen Druckgradienten.

In bekannten Verfahren zur Speicherung und/oder zur Entnahme von Fluiden in bzw. aus Fluid-Adsorptionsspeichern werden die komplexen Wechselwirkungen zwischen Ad- und Desorptionsprozessen, Temperatur- und Druckveränderungen und dem Massenstrom des Fluids üblicherweise nicht oder nicht ausreichend berücksichtigt, so dass die Adsorptionsfähigkeit der Adsorbentien einerseits während den Entnahmevorgängen aus Fluid-Adsorptionsspeichern höher als erwünscht ist und andererseits während Füllungsvorgängen von Fluid-Adsorptionsspeichern niedriger als erwünscht ist. In Bezug auf Entnahmevorgänge aus Fluid-Adsorptionsspeichern kann dies kann mit dem Nachteil verbunden sein, dass sich ein Fluid-Adsorptionsspeicher nur langsam oder nur unvollständig entleeren lässt. Eine nur unvollständige Entleerung eines Fluid-Adsorptionsspeichers kann wiederum mit dem Nachteil verbunden sein, dass der Fluid-Adsorptionsspeicher in einem daran anschließenden Füllvorgang eine geringere zusätzliche Fluidstoffmenge speichern kann. In anderen Worten wird die Speicherkapazität von Fluid-Adsorptionsspeichern nicht optimal ausgenutzt, wenn die komplexen Wechselwirkungen zwischen Ad- und Desorptionsprozessen, Temperatur- und Druckveränderungen und dem Massenstrom des Fluids nicht ausreichend berücksichtigt werden.

Der Erfindung liegt daher die Aufgabe zugrunde, ein neues Verfahren, eine neue Vorrichtung und ein neues System anzugeben, welche die Nachteile des Standes der Technik zumindest weitgehend vermeidet.

Es wird ein Verfahren und ein System vorgeschlagen, bei dem den Biogasanlagen bzw. deren Betreibern Transportbehälter zur Verfügung gestellt werden, in die das Biogas vor Ort an der Biogasanlage abgefüllt oder eingefüllt wird und bei ausreichender Befüllung dann die befüllten Transportbehälter mit dem darin enthaltenen Biogas abgeholt werden und in einer Verwertungsanlage wieder entleert werden und das Biogas verwertet wird. Verwertung des Biogases geschieht insbesondere dadurch, dass die Hauptbestandteile des Biogases voneinander zumindest weitgehend getrennt werden und einer individuellen Verwertung zugeführt werden. Beispielsweise kann das Methan aus dem Biogas herausgetrennt werden und für eine Energieerzeugung, beispielsweise im Rahmen einer Kraft-Wärme-Kupplung oder auch nur einer reinen Stromerzeugung verwendet werden oder auch als Grundstoff für eine chemische Synthese verwendet werden. Da für das Biogas in den Biogasanlagen in der Regel nur ein begrenztes Zwischenspeichervolumen vorhanden ist (typischerweise die der Vergärungsanlage oder Kompostierungsanlage vorliegenden Gasvolumina, die beispielsweise durch eine flexible Decke begrenzt werden), muss sichergestellt sein, dass das Biogas, das in der Regel in der Biogasanlage kontinuierlich entsteht, auch kontinuierlich über die Transportbehälter abgeführt wird. Das bedeutet, dass ein Transportbehälter, der voll ist oder ausreichend mit Biogas befüllt ist, dann auch rechtzeitig abgeholt wird und ein neuer, leerer Transportbehälter stattdessen zur Verfügung gestellt wird. Zu diesem Zweck wird der Füllstand oder Befüllungsgrad der Transportbehälter überwacht, vorzugsweise auch über eine Datenverbindung mit einer Kontroll- oder Fernwartungsstation, die insbesondere auch mit der Verwertungsanlage gekoppelt ist, und es werden regelmäßige Meldungen oder Daten übertragen über den Befüllungsgrad, um rechtzeitig einen Ersatztransportbehälter oder einen leeren Transportbehälter loszuschicken, damit dieser einen vollen Behälter ersetzen kann. Vorzugsweise werden einer Biogasanlage mehrere Transportbehälter zugeordnet oder dort angeliefert und datiert, um eine gewisse Redundanz vorzusehen für das Abführen und Befüllen des Biogases. Beispielsweise können zwei oder drei oder vier oder fünf oder noch mehr Transportbehälter je nach Größe der Biogasanlage und der erzeugten Biogasvolumina pro Zeiteinheit zur Verfügung gestellt werden. Transportbehälter werden vorzugsweise mittels Transportfahrzeugen wie landwirtschaftlichen Fahrzeugen oder Lastkraftfahrzeugen oder gegebenenfalls auch schienengebundenen Fahrzeugen angeliefert. Die Befüllungsanlage (Fluidabführvorrichtung) an der Biogasanlage kann nun mit dem Transportbehälter mittransportiert werden und gegebenenfalls mit diesem integriert oder mitgeliefert werden oder auch stationär an dem Lieferfahrzeug angeordnet sein. Eine Fluidabführvorrichtung führt das Biogas aus dem bei der Biogasanlage vorhandenen Speicher ab und pumpt dieses Biogas in den jeweiligen Transportbehälter. Dazu umfasst die Fluidabführvorrichtung in der Regel eine Pumpvorrichtung oder Saugpumper und ein oder mehrere Anschlüsse und Ventile zum Anschließen und Entkoppeln von einem Auslass des Biogasspeichers der Biogasanlage. Die Fluidabführvorrichtung umfasst ferner eine Messeinrichtung zum Messen des Füllstandes des Biogases in dem Transportbehälter oder eine Messeinrichtung, die den bereits in dem Transportbehälter eingeströmten oder hineingepumpten Volumenstrom oder das Gesamtvolumen des Biogases misst und daraus mittelbar oder indirekt bestimmt, welche Gasmenge bereits in den Transportbehälter transportiert oder hineingepumpt wurde. Die Transportbehälter sind bevorzugt Adsorptionsbehälter mit einem Adsorptionsmaterial zum Adsorbieren der in dem Biogas enthaltenen Gasbestandteile, insbesondere des Methans und des Kohlendioxids. Das Adsorptionsmaterial kann wenigstens eines der folgenden Materialien sein: Aktivkohle, periodisch mesoporöses Organosiliziumdioxid, kontrollierbar poröse Gläser, mesoporöses Siliziumdioxid, kohlenstoffmesoporöses Korea, monolithischer Kohlenstoff, insbesondere monolithischer nanoporöser Kohlenstoff, oder monomodal mikroporöse kohlenstoffbasierte Adsorbentien.

Wenn der Transportbehälter ein solcher Adsorptionsbehälter ist, wird mittels der Fluidabführvorrichtung und deren Pumpvorrichtung das Biogas in dem Transportbehälter typischerweise auf einen Überdruck von ca. 60 bis 80 bar gebracht. Es ist aber auch möglich, dass die Transportbehälter klassische Kompressionsbehälter sind oder Druckbehälter, in die das Biogas unter einem zu hohen Druck, typischerweise > 200 bar gesetzt wird und dadurch wenigstens teilweise verflüssigt wird. In dieser Variante sind dann entsprechende Kompressoren als Pumpvorrichtungen vorgesehen, die wieder entweder mit dem Transportfahrzeug mitgeführt oder stationär an der Biogasanlage angeordnet sind. Wenn ein Transportbehälter voll ist oder der maximale Befüllungsgrad oder Füllstand für das Biogas erreicht ist, wird entweder vor Ort von einer Meldevorrichtung eine Meldung an die Zentrale geschickt, dass ein neuer Transportbehälter auf den Weg geschickt werden muss mit einem Transportfahrzeug. Oder es wird kontinuierlich der aktuelle Füllstand oder Befüllungsgrad um das entsprechende Messsignal oder die entsprechenden Messdaten an die Zentrale übermittelt und die Zentrale vergleicht selbst den aktuellen Messwert oder das aktuelle Messsignal mit einem maximalen Wert, der einer vollständigen Befüllung entspricht, und entscheidet dann, wenn dies der Fall ist, dass ein voller Behälter ausgetauscht und ein leerer Transportbehälter auf den Weg geschickt werden muss. Zum Bestimmen des Befüllungsgrades oder Füllstandes kann der Volumenstrom oder der Mengenfluss gemessen und aufsummiert oder aufintegriert werden oder auch ein Druck am Eingang des Behälters oder im Behälter ermittelt werden, welcher dann das Maß für die Befüllung des Transportbehälters ist.

In der Biogasanlage können organische Abfälle oder tierische Exkremente wie Gülle oder Dung oder pflanzliche Substanzen, insbesondere Biomüll, vergärt oder zersetzt werden und in Kohlendioxid und Methan und andere Zersetzungsprodukte in meist geringeren Prozenten umgewandelt werden. Vor Ort kann an der Biogasanlage auch ein Filter oder eine Reinigungseinheit vorgesehen sein, insbesondere mit Aktivkohlefiltern oder Aktivkohlekolonnen, durch die das Biogas zur Reinigung geleitet wird, so dass unerwünschte Komponenten herausgefiltert werden und das Biogas eine reinere Zusammensetzung aus Methan und Kohlendioxid erhält. Eine solche Gasreinigung kann außerstationär oder vor Ort auch an dem Transportfahrzeug vorgesehen sein, das beim vor allem in Kombination mit einer Fluidabführvorrichtung, die auch auf dem Transportfahrzeug vorgesehen ist, so dass das Biogas zunächst mit der Reinigungsvorrichtung auf dem Transportfahrzeug gereinigt und dann das gereinigte Biogas mit der Fluidabführvorrichtung in die Transportbehälter auf dem Transportfahrzeug gepumpt wird. Die Fluidabführvorrichtung vor Ort kann auch vor Ort dazu verwendet werden, einen schon gefüllten Transportbehälter wieder zu entleeren, falls das Methan vor Ort verwendet werden soll, beispielsweise zur Energiegewinnung oder Heizung.

Das erfindungsgemäße Verfahren ist ein Verfahren zum Befüllen wenigstens eines Fluidspeichers umfassend:
(a) Bereitstellen eines ersten Fluidspeichers, insbesondere eines Biogasspeichers, der
   (a1) wenigstens ein Auslassventil aufweist sowie
   (a2) mindestens ein Fluid oder Fluidgemisch mit Molekülen zumindest zweier unterschiedlicher chemischer Substanzen, insbesondere ein Biogasgemisch mit Methanmolekülen und Kohlendioxidmolekülen, umfasst und
(b) Bereitstellen eines zweiten Fluidspeichers, der wenigstens ein Einlassventil aufweist;
(c) Bereitstellen einer Fluidabführvorrichtung umfassend wenigstens eine Zuleitung, wenigstens eine Ausleitung, eine Steuereinheit und eine Messeinheit zur Erfassung von Messwerten einer oder mehrerer der folgenden Messgrößen:
   - Druck innerhalb der Zuleitung der Fluidabführvorrichtung,
   - Temperatur innerhalb der Zuleitung der Fluidabführvorrichtung,
   - Massenstrom durch die Fluidabführvorrichtung; und
   - Fluidkonzentration innerhalb der Zuleitung der Fluidabführvorrichtung;
(d) Verbinden der Zuleitung der Fluidabführvorrichtung mit dem geschlossenen Auslassventil des ersten Fluidspeichers;
(e) Verbinden der Ausleitung der Fluidabführvorrichtung mit dem Einlassventil des zweiten Fluidspeichers; und
(f) Öffnen des Auslassventils des ersten Fluidspeichers und Ausströmen des Fluids aus dem ersten Fluidspeicher durch das geöffnete Auslassventil und durch die Fluidabführvorrichtung in den zweiten Fluidspeicher;
(g) Erfassen von Messwerten der einen oder mehreren Messgrößen durch die Messeinheit;
(h) Empfangen eines den ein oder mehreren erfassten Messwerten entsprechenden Steuersignals durch die Steuereinheit; und
(i) Ermitteln eines dem Füllstand des zweiten Fluidspeichers entsprechenden Füllstandwerts durch die Steuereinheit auf Basis des Steuersignals.

Das in einem exemplarischen Fluidspeicher gespeicherte Biogas hat beispielsweise eine Methankonzentration in Höhe von 60 Vol.-% und eine Kohlenstoffdioxidkonzentration in Höhe von 40 Vol.-%. Der Druck im gefüllten Fluidspeicher beträgt beispielsweise 6 MPa.

Das Verbinden der Zuleitung der Fluidabführvorrichtung mit dem Auslassventil, das Öffnen des Auslassventils, kann durch eine Bedienperson durchgeführt und überwacht werden. Alternativ können diese Verfahrensschritte auch in automatisierter Form von einem dazu geeigneten System durchgeführt werden.

Der erste Fluidspeicher kann beispielsweise der Biogasspeicher einer Biogaserzeugungsanlage sein.

Die Fluidabführvorrichtung kann beispielsweise an der Biogaserzeugungsanlage, am ersten Fluidspeicher oder an einem Tankfahrzeug angeordnet sein.

Gemäß einer weiteren Ausführungsform des erfindungsgemäßen Verfahrens wird der Füllstandwert des ersten Fluidspeichers und/oder des zweiten Fluidspeichers auf einer Anzeige der Fluidabführvorrichtung (2) angezeigt wird oder durch eine mit der Steuereinheit verbundene Kommunikationseinheit des zweiten Fluidspeichers drahtgebunden oder drahtlos an eine Empfangseinheit, insbesondere eine Empfangseinheit eines Computers oder Servers, übertragen wird.

Gemäß einer weiteren Ausführungsform des erfindungsgemäßen Verfahrens umfasst die Fluidabführvorrichtung ferner eine Saugpumpe und/oder einen Massendurchflussregler.

Unter einer Saugpumpe wird vorstehend und nachfolgend eine Pumpe verstanden, die durch Erzeugung eines Unterdrucks ein zu förderndes Medium, beispielsweise ein Fluid, ansaugen kann. Eine Saugpumpe ist auch als Vakuumpumpe bezeichenbar. Die Saugpumpe kann beispielsweise als Hubkolbenpumpe, Drehschieberpumpe, Sperrschieberpumpe, Wälzkolbenpumpe oder als Schraubenvakuumpumpe ausgebildet sein.

Vorteilhafterweise wird die Saugpumpe zur Erzeugung des Ansaugdrucks zumindest dann betrieben, wenn der Druck im ersten Fluidspeicher nach dem Öffnen des Auslassventils von im Wesentlichen 6 MPa auf im Wesentlichen 2,5 MPa abgefallen ist.

Gemäß einer weiteren Ausführungsform des erfindungsgemäßen Verfahrens ist die Steuereinheit als Regelungseinheit ausgebildet oder konfiguriert, die eine oder mehrere der folgenden Regelgrößen regelt:
- Höhe eines von der Saugpumpe erzeugten Ansaugdrucks;
- Frequenz oder Drehzahl der Saugpumpe; und
- Größe der effektiven Durchflussöffnung des Massendurchflussreglers.

Gemäß einer weiteren Ausführungsform des erfindungsgemäßen Verfahrens umfasst die Fluidabführvorrichtung ferner:
- eine erste Ausleitung;
- eine zweite Ausleitung; und
- ein Umschaltventil das ausgebildet oder konfiguriert ist, von der Steuereinheit ein Umschaltsignal zum Schalten von einer ersten Stellung in eine zweite Stellung zu empfangen;
wobei das Verfahren ferner umfasst:
- Bereitstellen eines dritten Fluidspeichers, der wenigstens ein Einlassventil aufweist;
- Verbinden der ersten Ausleitung der Fluidabführvorrichtung mit dem Einlassventil des zweiten Fluidspeichers, wobei das Umschaltventil in der ersten Stellung das Auslassventil des ersten Fluidspeichers mit dem Einlassventil des zweiten Fluidspeichers fluidisch verbindet und wobei das Umschaltventil vor dem Öffnen des Auslassventils des ersten Fluidspeichers in der ersten Stellung vorliegt;
- Verbinden der zweiten Ausleitung der Fluidabführvorrichtung mit dem Einlassventil des dritten Fluidspeichers, wobei das Umschaltventil in der zweiten Stellung das Auslassventil des ersten Fluidspeichers mit dem Einlassventil des dritten Fluidspeichers fluidisch verbindet;
- Ermitteln eines dem Füllstand des zweiten Fluidspeichers entsprechenden Füllstandwerts oberhalb eines ersten Schwellenwertes durch die Steuereinheit auf Basis des Steuersignals;
- Erzeugen eines Umschaltsignals durch die Steuereinheit zum Schalten von der ersten Stellung in die zweite Stellung;
- Empfangen des Umschaltsignals durch das Umschaltventil;
- Schalten des Umschaltventils in die zweite Stellung, so dass das aus dem ersten Fluidspeicher durch das geöffnete Auslassventil ausströmende Fluid durch die Fluidabführvorrichtung in den dritten Fluidspeicher strömt, wenn der dem Füllstand des zweiten Fluidspeichers entsprechende Füllstandwert oberhalb des ersten Schwellenwerts liegt.

Gemäß einer weiteren Ausführungsform des erfindungsgemäßen Verfahrens löst der durch den drahtgebunden oder drahtlos an die Empfangseinheit des Computers oder des Servers übertragene Füllstandwert das Bereitstellen eines weiteren Fluidspeichers aus, wenn der Füllstandwert einen zweiten Schwellenwert übersteigt.

Gemäß einer weiteren Ausführungsform des erfindungsgemäßen Verfahrens
steht der erste Fluidspeicher unter einem Speicherdruck aus einem Hochdruckbereich, insbesondere zwischen 2 und 10 MPa, steht, und in einem ersten Trennmodus die folgenden Verfahrensschritte an oder mit dem erste Fluidspeicher durchgeführt werden:
- Öffnen des Auslassventils des ersten Fluidspeichers und Ausströmen des Fluids aus dem ersten Fluidspeicher durch das geöffnete Auslassventil in einem ersten Arbeitsmodus, insbesondere in einem Passivmodus ohne Ansaugdruck der Saugpumpe, bis der Speicherdruck einen Niederdruckbereich, insbesondere unterhalb von 2 MPa, erreicht und/oder solange das ausströmende Fluid überwiegend Methanmoleküle enthält,
- im Anschluss an den ersten Arbeitsmodus, insbesondere im Anschluss an den Passivmodus, Betreiben der Fluidabführvorrichtung in einem zweiten Arbeitsmodus, insbesondere in einem Aktivmodus, mit folgenden Merkmalen:
   - Erzeugung eines Ansaugdrucks an dem geöffneten Auslassventil des ersten Fluidspeichers mittels der Saugpumpe, und
   - Abführen des Fluids aus dem ersten Fluidspeicher durch die Fluidabführvorrichtung durch den Ansaugdruck.

Die erfindungsgemäße Vorrichtung ist eine Fluidabführvorrichtung, insbesondere zur Verwendung in einem Verfahren nach einem der vorhergehenden Ansprüche, für ein Fluid oder Fluidgemisch, insbesondere für ein in einem Fluidspeicher gespeichertes Biogasgemisch,
wobei die Vorrichtung eine Zuleitung, wenigstens eine Ausleitung, eine Steuereinheit und eine Messeinheit zur Erfassung von Messwerten einer oder mehrerer der folgenden Messgrößen umfasst:
- Druck innerhalb der Zuleitung der Fluidabführvorrichtung,
- Temperatur innerhalb der Zuleitung der Fluidabführvorrichtung,
- Massenstrom durch die Fluidabführvorrichtung; und
- Fluidkonzentration innerhalb der Zuleitung der Fluidabführvorrichtung.

Gemäß einer weiteren Ausführungsform der erfindungsgemäßen Vorrichtung Fluidabführvorrichtung weist die Fluidabführvorrichtung ferner eine Anzeige zur Anzeige eines Füllstandwerts mindestens eines mit der Fluidabführvorrichtung verbundenen Fluidspeichers und/oder eine mit der Steuereinheit verbundene Kommunikationseinheit auf, die so ausgebildet oder konfiguriert ist, dass der Füllstandwert drahtgebunden oder drahtlos an eine Empfangseinheit, insbesondere eine Empfangseinheit eines Computers oder Servers, übertragen werden kann.

Gemäß einer weiteren Ausführungsform der erfindungsgemäßen Vorrichtung umfasst die Fluidabführvorrichtung ferner eine Saugpumpe, und wobei die Vorrichtung ausgebildet oder dazu geeignet ist, mittels der Saugpumpe einen Ansaugdruck zu erzeugen und/oder wobei die Vorrichtung ferner einen Massendurchflussregler umfasst, und wobei die Vorrichtung ausgebildet oder dazu geeignet ist, mittels des Massendurchflussreglers den Massenstrom durch die Fluidabführvorrichtung auf einen Massenstromsollwert zu regeln, wobei der Massenstromsollwert insbesondere zeitabhängig ist.

Gemäß einer weiteren Ausführungsform der erfindungsgemäßen Vorrichtung ist die Höhe des Ansaugdrucks zeitabhängig und der Ansaugdruck wird von der Saugpumpe entlang eines vorgegebenen oder vorgebbaren zeitlichen Verlaufs erzeugt.

Gemäß einer weiteren Ausführungsform der erfindungsgemäßen Vorrichtung umfasst die Fluidabführvorrichtung ferner:
- eine erste Ausleitung;
- eine zweite Ausleitung; und
- ein Umschaltventil, das ausgebildet oder konfiguriert ist, von der Steuereinheit ein Umschaltsignal zum Schalten von einer ersten Stellung in eine zweite Stellung zu empfangen, wobei die Zuleitung der Fluidabführvorrichtung in der ersten Stellung mit der ersten Ausleitung und die Zuleitung der Fluidabführvorrichtung in der zweiten Stellung mit der zweiten Ausleitung fluidisch verbunden ist.

Das erfindungsgemäße System ist ein System, insbesondere zur Verwendung in einem der vorhergehenden Verfahren, umfassend eine Fluidabführvorrichtung nach einem der vorhergehend beschriebenen Fluidabführvorrichtungen, einen ersten Fluidspeicher und einen zweiten Fluidspeicher.

Gemäß einer weiteren Ausführungsform des erfindungsgemäßen Systems ist der zweite Fluidspeicher ein Fluid-Adsorptionsspeicher.

Der zweite Fluid-Adsorptionsspeicher kann beispielsweise Adsorbentien mit einer gravimetrischen Methanspeicherkapazität von mindestens 0,13 kg Methan pro 1 kg Adsorbentien umfassen. Ferner kann der zweite Fluid-Adsorptionsspeicher beispielsweise eine volumetrische Speicherkapazität in Höhe von mindestens 0,08 kg Methan pro 1 l Fluid-Adsorptionsspeichervolumen bei einer Temperatur von 20 °C und einem Druck von 6 MPa aufweisen.

Gemäß einer weiteren Ausführungsform des erfindungsgemäßen Systems umfasst das System einen dritten Fluidspeicher, wobei der dritte Fluidspeicher insbesondere ein Fluid-Adsorptionsspeicher ist.

Vorgehend und nachfolgend kann unter einem ersten Arbeitsmodus einerseits ein Passivmodus ohne Ansaugdruck der Saugpumpe und andererseits ein Modus verstanden werden, in dem die Saugpumpe einen ersten Ansaugdruck oder einen Ansaugdruck entlang einer ersten Druckkurve erzeugt. Ferner kann vorgehend und nachfolgend unter einem zweiten Arbeitsmodus einerseits ein Aktivmodus mit einem Ansaugdruck der Saugpumpe und andererseits ein Modus verstanden werden, in dem die Saugpumpe einen zweiten Ansaugdruck, der höher ist als der erste Ansaugdruck, oder einen Ansaugdruck entlang einer zweiten Druckkurve erzeugt. Beispielsweise wird die Saugpumpe im ersten Arbeitsmodus mit einem Ansaugdruck in Höhe von 100 kPa und im zweiten Arbeitsmodus mit einem Ansaugdruck in Höhe von 1 MPa betrieben. Alternativ wird die Saugpumpe beispielsweise im ersten Arbeitsmodus zunächst mit einem Ansaugdruck in Höhe von 100 kPa betrieben, wobei der Ansaugdruck über die Dauer des ersten Arbeitsmodus linear oder nicht-linear auf einen Ansaugdruck in Höhe von 500 kPa ansteigt, und wobei die Saugpumpe im zweiten Arbeitsmodus zunächst mit einem Ansaugdruck in Höhe von 1 MPa betrieben wird und der Ansaugdruck über die Dauer des zweiten Arbeitsmodus hinweg auf einen Ansaugdruck in Höhe von 3 MPa ansteigt.

Es wird in bevorzugten Ausführungsformen gemäß der Erfindung ein Verfahren (Logistik-Verfahren) und ein System (Logistik-System) vorgeschlagen, bei dem den Biogasanlagen bzw. deren Betreibern Transportbehälter zur Verfügung gestellt werden, in die das Biogas vor Ort an der Biogasanlage oder an einer mit der Biogasanlage über Leitungen verbundenen Sammelstation abgefüllt oder eingefüllt wird und bei ausreichender Befüllung dann die befüllten Transportbehälter mit dem darin enthaltenen Biogas abgeholt werden und in einer Verwertungsanlage wieder entleert werden und das Biogas oder zumindest Bestandteile davon wie das Methan anschließend verwertet wird.

In einer Biogasanlage (oder: Biogasreaktor) werden typischerweise organische Abfälle oder tierische Exkremente wie Gülle oder Dung oder pflanzliche Substanzen, insbesondere Biomüll, vergärt oder zersetzt und in Kohlendioxid und Methan und andere Zersetzungsprodukte in meist geringeren Prozentanteilen umgewandelt.

Die Verwertung des Biogases in der Verwertungsanlage geschieht insbesondere dadurch, dass die Hauptbestandteile des Biogases voneinander zumindest weitgehend getrennt werden und einer individuellen Verwertung zugeführt werden. Beispielsweise kann das Methan aus dem Biogas herausgetrennt werden und für eine Energieerzeugung, beispielsweise im Rahmen einer Kraft-Wärme-Kupplung oder auch nur einer reinen Stromerzeugung verwendet werden oder auch als Grundstoff für eine chemische Synthese verwendet werden.

Da für das Biogas in Biogasanlagen in der Regel nur ein begrenztes Zwischenspeichervolumen vorhanden ist (typischerweise die der Vergärungsanlage oder Kompostierungsanlage vorliegenden Gasvolumina, die beispielsweise durch eine flexible Decke begrenzt werden), muss nun sichergestellt sein, dass das Biogas, das in der Regel in der Biogasanlage kontinuierlich entsteht, auch kontinuierlich über die Transportbehälter abgeführt wird.

Das wird nun in einer Ausführungsform dadurch gewährleistet, dass ein Transportbehälter, der voll ist oder ausreichend mit Biogas befüllt ist, dann auch rechtzeitig abgeholt wird und ein neuer, leerer Transportbehälter stattdessen zur Verfügung gestellt wird. Zu diesem Zweck wird der Füllstand oder Befüllungsgrad der Transportbehälter überwacht, vorzugsweise auch über eine Datenverbindung mit einer Kontroll- oder Fernwartungsstation, die insbesondere auch mit der Verwertungsanlage gekoppelt ist, und es werden regelmäßige Meldungen oder Daten übertragen über den Befüllungsgrad, um rechtzeitig einen Ersatztransportbehälter oder einen leeren Transportbehälter loszuschicken, damit dieser einen vollen Behälter ersetzen kann.

Vorzugsweise werden einer Biogasanlage mehrere Transportbehälter zugeordnet oder dort angeliefert und datiert, um eine gewisse Redundanz vorzusehen für das Abführen und Befüllen des Biogases. Beispielsweise können zwei oder drei oder vier oder fünf oder noch mehr Transportbehälter je nach Größe der Biogasanlage und der erzeugten Biogasvolumina pro Zeiteinheit zur Verfügung gestellt werden.

Die Transportbehälter werden vorzugsweise mittels Transportfahrzeugen antransportiert und wegtransportiert, wie landwirtschaftlichen Fahrzeugen oder Lastkraftfahrzeugen oder gegebenenfalls auch schienengebundenen Fahrzeugen.

Eine Fluidabführvorrichtung zum Abführen des Biogases aus der Biogasanlage oder Sanmelstation kann nun von dem Transportfahrzeug mit dem Transportbehälter mittransportiert werden und gegebenenfalls mit diesem integriert oder mitgeliefert werden oder auch stationär an dem Fahrzeug angeordnet sein oder auch stationaär an der Biogasanlage oder Sammelstation sein. Die Fluidabführvorrichtung führt das Biogas aus dem bei der Biogasanlage vorhandenen Speicher ab und pumpt dieses Biogas in den jeweiligen Transportbehälter. Dazu umfasst die Fluidabführvorrichtung in der Regel eine Pumpvorrichtung oder Saugpumpe und ein oder mehrere Anschlüsse und Ventile zum Anschließen und Entkoppeln von einem Auslass des Biogasspeichers der Biogasanlage. Die Fluidabführvorrichtung umfasst ferner eine Messeinrichtung zum Messen des Füllstandes des Biogases in dem Transportbehälter oder eine Messeinrichtung, die den bereits in dem Transportbehälter eingeströmten oder hineingepumpten Volumenstrom oder das Gesamtvolumen des Biogases misst und daraus mittelbar oder indirekt bestimmt, welche Gasmenge bereits in den Transportbehälter transportiert oder hineingepumpt wurde. Die Transportbehälter sind bevorzugt Adsorptionsbehälter mit einem Adsorptionsmaterial zum Adsorbieren der in dem Biogas enthaltenen Gasbestandteile, insbesondere des Methans und des Kohlendioxids. Das Adsorptionsmaterial kann wenigstens eines der folgenden Materialien sein: Aktivkohle, periodisch mesoporöses Organosiliziumdioxid, kontrollierbar poröse Gläser, mesoporöses Siliziumdioxid, kohlenstoffmesoporöses Korea, monolithischer Kohlenstoff, insbesondere monolithischer nanoporöser Kohlenstoff, und monomodal mikroporöse kohlenstoffbasierte Adsorbentien.

Wenn der Transportbehälter ein solcher Adsorptionsbehälter ist, wird mittels der Fluidabführvorrichtung und deren Pumpvorrichtung das Biogas in dem Transportbehälter typischerweise auf einen geeigneten Überdruck gebracht. Es ist aber auch möglich, dass die Transportbehälter klassische Kompressionsbehälter sind oder Druckbehälter, in die das Biogas unter einem noch höheren Druck, gesetzt wird und dadurch wenigstens teilweise verflüssigt wird. In dieser Variante sind dann entsprechende Kompressoren als Pumpvorrichtungen vorgesehen, die wieder entweder mit dem Transportfahrzeug mitgeführt oder stationär an der Biogasanlage angeordnet sind.

Wenn ein Transportbehälter voll ist oder der maximale Befüllungsgrad oder Füllstand für das Biogas erreicht ist, wird entweder vor Ort von einer Meldevorrichtung eine Meldung an die Zentrale geschickt, dass ein neuer Transportbehälter auf den Weg geschickt werden muss mit einem Transportfahrzeug. Oder es wird kontinuierlich der aktuelle Füllstand oder Befüllungsgrad um das entsprechende Messsignal oder die entsprechenden Messdaten an die Zentrale übermittelt und die Zentrale vergleicht selbst den aktuellen Messwert oder das aktuelle Messsignal mit einem maximalen Wert, der einer vollständigen Befüllung entspricht, und entscheidet dann, wenn dies der Fall ist, dass ein voller Behälter ausgetauscht und ein leerer Transportbehälter auf den Weg geschickt werden muss. Zum Bestimmen des Befüllungsgrades oder Füllstandes kann der Volumenstrom oder der Mengenfluss gemessen und aufsummiert oder aufintegriert werden oder auch ein Druck am Eingang des Behälters oder im Behälter ermittelt werden, welcher dann das Maß für die Befüllung des Transportbehälters ist.

Vor Ort kann an der Biogasanlage auch ein Filter oder eine Reinigungseinheit vorgesehen sein, insbesondere mit Aktivkohlefiltern oder Aktivkohlekolonnen, durch die das Biogas zur Reinigung geleitet wird, so dass unerwünschte Komponenten herausgefiltert werden und das Biogas eine reinere Zusammensetzung aus Methan und Kohlendioxid erhält. Eine solche Gasreinigung kann außer stationär oder vor Ort auch an dem Transportfahrzeug vorgesehen sein, das beim vor allem in Kombination mit einer Fluidabführvorrichtung, die auch auf dem Transportfahrzeug vorgesehen ist, so dass das Biogas zunächst mit der Reinigungsvorrichtung gereinigt und dann das gereinigte Biogas mit der Fluidabführvorrichtung in die Transportbehälter gepumpt wird.

Die Fluidabführvorrichtung vor Ort kann in Ausführungsformen auch vor Ort dazu verwendet werden, einen schon gefüllten Transportbehälter wieder zu entleeren, falls das Methan vor Ort verwendet werden soll, beispielsweise zur Energiegewinnung oder Heizung.

Außerdem kann in einer zusätzlichen oder auch alternativen Ausführungsform zur Verwertung des Biogases vor Ort eine spezielle Vorrichtung zum Umwandeln des im Biogas enthaltenen Methans in Methanol vorgesehen sein.

Hierzu kann beispielsweise ein spezieller Verbrennungsmotor entweder vor Ort an der Biogasanlage angeordnet oder platziert werden oder auch mit dem Transportfahrzeug mitgeführt werden. Ein solcher Motor, der beispielsweise von der Firma Emvolon (siehe https://emvolon.com oder auch https://www.auto-motor-und-sport.de/tech-zukunft/alternative-antriebe/methan-umwandlung-verbrennungsmotoren/angeboten wird, wandelt durch eine spezielle Einstellung der Verbrennungsparameter einen beträchtlichen Teil des Methans in Methanol um.

Das Methanol kann dann in Tanks oder eigenen Transportbehältern gespeichert werden und auch mit einem zentralen Logistiksystem analog wie bei den Transportbehältern für das Biogas insbesondere Adsorbtionsbehältern, im befüllten Zustand abtransportiert und dann durch neue leere Transportbehälter ersetzt werden. Auch hier können der Befüllungsgrad oder der Füllstand des Methanoltanks oder Transportbehälters für Methanol wieder kontinuierlich gemessen und an die Überwachungs- oder Kontrollzentrale übermittelt werden, die dann den zwei mit ausreichendem Vorlauf vor einer endgültigen Befüllung die Versendung eines neuen leeren Transportbehälters veranlasst. Wenn mehrere Transportbehälter vorgesehen sind, können natürlich auch mehrere Transportbehälter angeliefert und abgeholt werden.

Die Logistik und das Transportsystem und Transportverfahren für das Biogas, welches das Methan enthält, wie auch das den bereits aus dem Biogas bzw. dem darin enthaltenen Methan umgesetzte Methanol kann in Kombination oder jeweils einzeln vorgesehen sein.

Der Vorteil der vorgeschlagenen Logistik ist der deutlich geringere Aufwand vor Ort und die Mobilität, da keine Gasleitungen bis zu der Biogasanlage gelegt werden müssen und somit auch dezentrale oder weit entfernt liegende Biogasanlagen entsprechend versorgt werden können bzw. deren Produktion abgenommen werden kann. Es ist dabei ebenfalls möglich, dass das Biogas von einer Biogasanlage oder einem Biogasreaktor auch eine Teilstrecke über Gasleitungen transportiert wird bis zu einer Abholstation, an der dann eine Befüllung der Transportbehälter stattfindet, insbesondere wenn auf dem Gelände der Biogasanlage Lagerung der Transportbehälter nicht erwünscht oder sogar nicht möglich ist.

Die Erfindung wird im Folgenden anhand von Ausführungsbeispielen weiter erläutert. Dabei wird auch auf die Zeichnungen Bezug genommen, in denen jeweils schematisch dargestellt sind:
- FIG 1: ein System umfassend einen ersten Fluidspeicher einer Biogaserzeugungsanlage, eine Fluidabführvorrichtung, einen zweiten Fluidspeicher und einen Computer,
- FIG 2A: ein System umfassend einen ersten Fluidspeicher, eine Fluidabführvorrichtung in einem Passivmodus, einen zweiten Fluidspeicher und einen dritten Fluidspeicher
- FIG 2B: ein System umfassend einen ersten Fluidspeicher, eine Fluidabführvorrichtung in einem Aktivmodus, einen zweiten Fluidspeicher und einen dritten Fluidspeicher
- FIG 3: eine Fluidabführvorrichtung zum Abführen eines Fluids in einem System gemäß einer der FIG 1 bis 2B,
- FIG 4: ein System umfassend einen ersten Fluidspeicher einer Biogaserzeugungsanlage, eine Fluidabführvorrichtung, einen zweiten Fluidspeicher und ein Tankfahrzeug mit einem dritten Fluidspeicher.

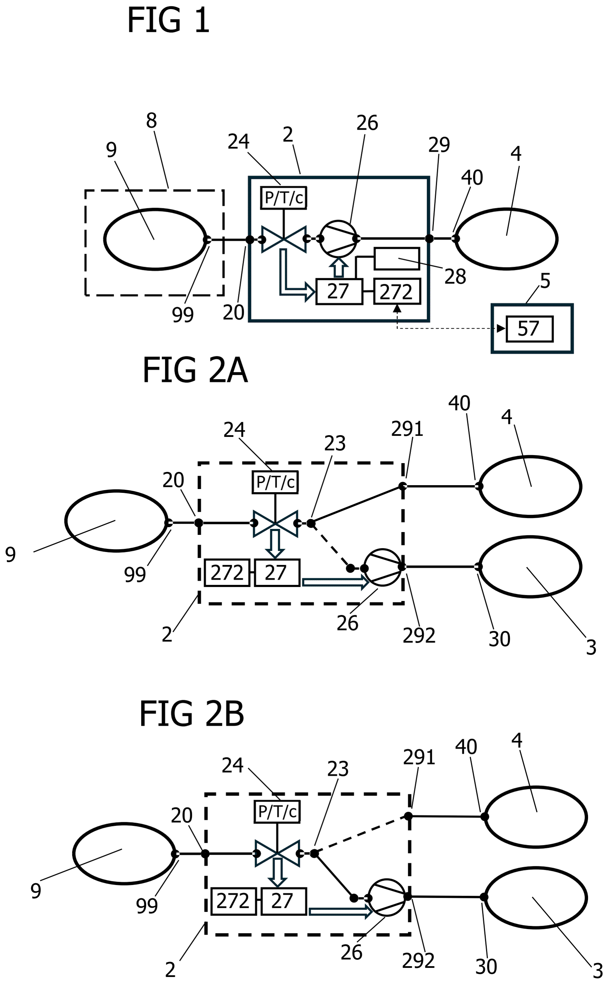

Einander entsprechende Teile und Größen sind in den FIG 1 bis 4 mit denselben Bezugszeichen versehen.

Gemäß FIG 1 wird ein in einem ersten Fluidspeicher 9 einer Biogaserzeugungsanlage gespeichertes Fluid, insbesondere Biogas, durch eine Fluidabführvorrichtung 2 in einen zweiten Fluidspeicher 4 abgeführt. Ein Auslassventil 99 des ersten Fluidspeichers 9 ist mit einer Zuleitung 20 der Fluidabführvorrichtung 2 verbunden. Die Fluidabführvorrichtung 2 weist eine Messeinheit 24, eine Saugpumpe 26, eine Steuereinheit 27, eine Kommunikationseinheit 272 und eine Anzeige 28 auf. Der zweite Fluidspeicher 4 weist ein Einlassventil 40 auf. Das Einlassventil 40 ist mit einer Ausleitung 29 der Fluidabführvorrichtung verbunden. Die Kommunikationseinheit 272 steht in kommunikativer Verbindung mit einer Kommunikationseinheit 57 eines Computers 5. Der Computer 5 ist von der Biogaserzeugungsanlage 8 entfernt angeordnet, beispielsweise in Form eines externen Servers oder als Teil eines externen Kontrollsystems, das die Füllstände von Fluidspeichern überwacht. Die Messeinheit 24 ist ausgebildet oder dazu geeignet, den Druck, die Temperatur und die Fluidkonzentration innerhalb der Zuleitung 20 sowie den Massenstrom durch die Fluidabführvorrichtung 2 zu ermitteln. Entsprechende Messwerte des Drucks, der Temperatur und der Fluidkonzentration in der Zuleitung 20 sowie des Massenstroms durch die Fluidabführvorrichtung 2 werden von der Messeinheit 24 an die Steuereinheit 27 übermittelt. Die Steuereinheit ist ausgebildet oder konfiguriert, auf Basis der empfangenen Messwerte einen Füllstand sowohl des ersten Fluidspeichers 9 als auch des zweiten Fluidspeichers 4 zu ermitteln. Die den ermittelten Füllständen entsprechenden Füllstandwerte sowohl des ersten Fluidspeichers 9 als auch des zweiten Fluidspeichers 4 werden auf der Anzeige 28, insbesondere auf einem Bildschirm oder einem Touchscreen, einer Bedienperson angezeigt. Außerdem werden die Füllstandwerte von der Steuereinheit 27 an eine Kommunikationseinheit 272 übermittelt und die Füllstandwerte von der Kommunikationseinheit 272 drahtgebunden oder drahtlos an einen von der Biogaserzeugungsanlage 8 entfernten Computer übertragen 5. Der Computer 5 empfängt die übertragenen Messwerte durch die Kommunikationseinheit 57. Auf diese Weise kann der Computer 5 in Entfernung zur Biogaserzeugungsanlage 8 die Füllstandwerte der Fluidspeicher 9 und 4 speichern und überwachen. Beispielsweise kann in Reaktion auf die Überschreitung eines Füllstandschwellwertes, insbesondere automatisch, ein weiterer Fluidspeicher zum Verbinden mit der Fluidabführvorrichtung 2 bereitgestellt werden.

Gemäß FIG 2A weist eine Fluidabführvorrichtung 2 ein Umschaltventil 23 auf, das die Zuleitung 20 der Fluidabführvorrichtung 2 in einer ersten Stellung mit einer mit einem zweiten Fluidspeicher 4 verbundenen ersten Ausleitung 291 verbindet. In einer zweiten Stellung des Umschaltventils 23 ist die Zuleitung 20 über einer Saugpumpe 26 und eine zweite Ausleitung 292 mit einem dritten Fluidspeicher 3 verbundenen. Die in FIG 2A gezeigte Stellung des Umschaltventils 23 entspricht der ersten Stellung, in der die Zuleitung 20 mit der ersten Ausleitung 291 verbunden ist. In der ersten Stellung des Umschaltventils 23 wird die Fluidabführvorrichtung 2 in einem Passivmodus betrieben. Aus einem unter Hochdruck mit Biogas gefüllten Fluidspeicher 9 strömt kurz nach dem Öffnen eines Auslassventils 99 vorrangig Methangas. Dies hat zur Folge, dass nach dem Öffnen des Auslassventils 99 zunächst die Methankonzentration im Fluidspeicher 9 stärker abnimmt als die Kohlenstoffdioxidkonzentration. In anderen Worten vergrößert sich in einer ersten Phase des Abführens von Biogas aus dem Fluidspeicher 9 der relative Kohlenstoffdioxidanteil in Fluidspeicher 9. Vorteilhafterweise wird das im Passivmodus der Fluidabführvorrichtung 2 abgeführte Biogas, das vorrangig Methan umfasst, in den zweiten Fluidspeicher 4 abgeführt. Der in der ersten Phase des Abführens vorrangig mit Methan zu füllende zweite Fluidspeicher 4 kann auch als Methanspeicher bezeichnet werden. Nach einer gewissen Zeitspanne nach Öffnen des Auslassventils 19 hat erstens sich der Druck im Fluidspeicher 9 verringert und zweitens sich der relative Anteil von Kohlenstoffdioxid des im Fluidspeichers 9 verbleibenden Biogases erhöht. Infolgedessen strömt in einer zweiten Phase des Abführens des Biogases typischerweise vorrangig Kohlenstoffdioxid durch das Auslassventil 99 in die Zuleitung 20 der Fluidabführvorrichtung 2. Um zu vermeiden, dass sich der Methanspeicher 4 in der zweiten Phase des Abführens des Biogases mit Biogas füllt, das nicht vorrangig Methan umfasst, wird das Umschaltventil 23 nach der ersten Phase des Abführens in die zweite Stellung geschaltet, d. h. über die Saugpumpe 26 und die zweite Ausleitung 292 mit dem dritten Fluidspeicher 3 verbunden.

Gemäß FIG 2B weist eine Fluidabführvorrichtung 2 ein Umschaltventil 23 auf, das die Zuleitung 20 der Fluidabführvorrichtung 2 in einer ersten Stellung mit einer mit einem zweiten Fluidspeicher 4 verbundenen ersten Ausleitung 291 verbindet. In einer zweiten Stellung des Umschaltventils 23 ist die Zuleitung 20 über einer Saugpumpe 26 und eine zweite Ausleitung 292 mit einem dritten Fluidspeicher 3 verbundenen. Die in FIG 2B gezeigte Stellung des Umschaltventils 23 entspricht der zweiten Stellung, in der die Zuleitung 20 mit der zweiten Ausleitung 292 verbunden ist. In der zweiten Stellung des Umschaltventils 23 wird die Fluidabführvorrichtung 2 in einem Aktivmodus betrieben.

Nach Ende eines Passivmodus der Fluidabführvorrichtung 2, beispielsweise wie in FIG 2A gezeigt, strömt gemäß FIG 2B in einer zweiten Phase des Abführens typischerweise vorrangig Kohlenstoffdioxid durch das Auslassventil 19 in die Zuleitung 20 der Fluidabführvorrichtung 2. Vorteilhafterweise wird das im Aktivmodus der Fluidabführvorrichtung 2 abgeführte Biogas, das vorrangig Kohlenstoffdioxid umfasst, in den dritten Fluidspeicher 3 abgeführt. Der in der zweiten Phase des Abführens vorrangig mit Kohlenstoffdioxid zu füllende dritte Fluidspeicher 3 kann auch als Kohlenstoffdioxidspeicher bezeichnet werden. Die Saugpumpe 26 erzeugt einen Ansaugdruck, der das verbleibende Fluid des Fluidspeichers 9 aus dem Fluidspeicher 9 abführt. Der erzeugte Ansaugdruck erhöht die aus dem Fluidspeicher 9 abführbare Stoffgesamtmenge bzw. das abführbare Gesamtvolumen des Biogases.

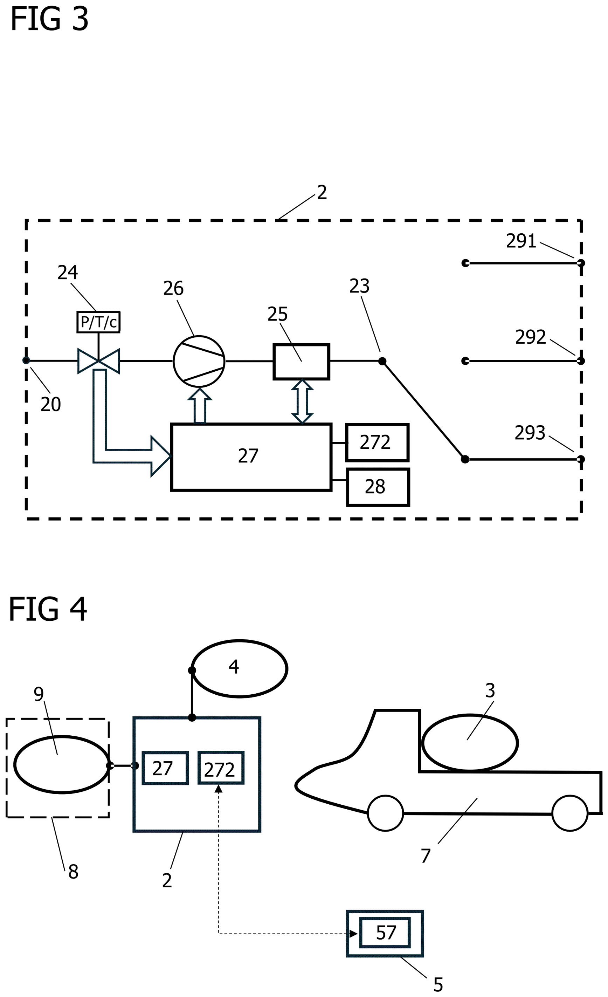

Gemäß FIG 3 weist eine Fluidabführvorrichtung 2 eine Zuleitung 20, eine Messeinheit 24, einen Massendurchflussregler 25, eine Saugpumpe 26, eine Steuereinheit 27 und ein Umschaltventil 23 auf. Das Umschaltventil 23 verbindet den Ausgang der Saugpumpe 26 mit einer von drei Ausleitungen, namentlich mit der ersten Ausleitung 291, der zweiten Ausleitung 292 oder der dritten Ausleitung 293. Ferner weist die Fluidabführvorrichtung eine mit der Steuereinheit 27 verbundene Kommunikationseinheit 272 sowie eine mit der Steuereinheit 27 verbundene Anzeige 28 auf. Die Anzeige 28 ist insbesondere als Touchscreen ausgebildet. Die Steuereinheit 27 kann auf Basis der von der Messeinheit 24 empfangenen Messwerte einen Füllstand der mit der Fluidabführvorrichtung 2 verbundenen Fluidspeicher ermitteln. Beispielsweise ist ein erster nicht dargestellter Fluidspeicher mit der Zuleitung 20 verbunden und ein zweiter nicht dargestellter Fluidspeicher mit der dritten Ausleitung 293 verbunden. Durch die Messung des Drucks, der Temperatur und der Fluidkonzentration in der Zuleitung 20 sowie des Massenstroms durch die Fluidabführvorrichtung kann die Steuereinheit 27 einen Füllstand des ersten Fluidspeichers sowie einen Füllstand des zweiten Fluidspeichers ermitteln. Die den ermittelten Füllständen entsprechenden Füllstandwerte können auf der Anzeige 28 angezeigt werden. Außerdem können die ermittelten Füllstandwerte an die Kommunikationseinheit 272 übermittelt werden. Die Kommunikationseinheit 272 kann die ermittelten Füllstandwerte an einen externen Computer oder einen externen Server, insbesondere drahtgebunden oder drahtlos, übertragen. Die Saugpumpe kann beispielsweise frequenzgesteuert bzw. drehzahlgesteuert sein. Die Messeinheit 24 erfasst den Druck, die Temperatur und die Gaskonzentration in der Zuleitung 20 und erzeugt entsprechende Messwerte. Die Steuereinheit 27 erhält die Messwerte von der Messeinheit 24. Der Massendurchflussregler 25 erfasst den Massenstrom bzw. die Durchflussrate durch die Fluidabführvorrichtung 2 und erzeugt entsprechende Messwerte. Die Steuereinheit 27 erhält die Messwerte vom Massendurchflussregler 25. Alternativ erfasst die Messeinheit 24 den Druck, die Temperatur, die Gaskonzentration in der Zuleitung 20 und ferner den Massenstrom bzw. die Durchflussrate durch die Fluidabführvorrichtung 2 und erzeugt entsprechende Messwerte, wobei die Steuereinheit 27 insbesondere auch die dem Massenstrom bzw. der Durchflussrate entsprechenden Messwerte von der Messeinheit 24 erhält. Die Steuereinheit 27 steuert den Betrieb des Massendurchflussreglers 25 und der Saugpumpe 26. Beispielsweise aktiviert die Steuereinheit 27 die Saugpumpe 26, wenn die Messeinheit 24 einen Druck unterhalb von 2,5 MPa erfasst und die Steuereinheit 27 ein diesem erfassten Druck entsprechendes Steuersignal erhält. Vorzugsweise weist die Saugpumpe 26 ein variables Kompressionsverhältnis, also ein variables Verhältnis aus dem Ausgangsdruck und dem Eingangsdruck der Saugpumpe 26, auf. Ferner erzeugt die Saugpumpe 26 die Höhe des Ansaugdrucks in Abhängigkeit von der dem empfangenen Steuersignal entsprechenden Höhe des erfassten Drucks. Zum Beispiel erzeugt die Saugpumpe 26 einen Ansaugdruck in Höhe von 50 kPa, wenn die Messeinheit 24 innerhalb der Zuleitung 20 der Fluidabführvorrichtung 2 einen Druck unterhalb von 2,5 MPa und oberhalb von 250 kPa erfasst, wohingegen die Saugpumpe 26 einen Ansaugdruck in Höhe von 500 Pa erzeugt, wenn die Messeinheit 24 innerhalb der Zuleitung 20 der Fluidabführvorrichtung 2 einen Druck unterhalb von 250 kPa erfasst. Die Steuereinheit 27 kann eine Regelungseinheit sein, die beispielsweise die Frequenz bzw. die Drehzahl der Saugpumpe 26 insbesondere in Abhängigkeit der von der Messeinheit 24 oder von dem Massendurchflussregler 25 erhaltenen Messwerte regelt. In anderen Worten nehmen die Messeinheit 24 und der Massendurchflussregler 25 die Ist-Werte beispielsweise des Drucks, der Temperatur und der Gaskonzentration in der Zuleitung 20 und den Ist-Wert des Massenstroms bzw. der Durchflussrate durch die Fluidabführvorrichtung 2 auf und leiten diese an die Steuereinheit 27 als Regelungseinheit weiter. In der Steuereinheit 27 als Regelungseinheit werden die Ist-Werte des Drucks, der Temperatur, der Gaskonzentration und des Massenstroms bzw. der Durchflussrate mit entsprechenden Soll-Werten verglichen, die in der Steuereinheit 27 als Regelungseinheit gespeichert oder zumindest abrufbar sind. Liegt eine Abweichung zwischen den Ist-Werten und den Soll-Werten vor, so wird über einen Regelalgorithmus in der Steuereinheit 27 als Regelungseinheit eine Anpassung der Betriebsparameter beispielsweise der Saugpumpe 26 und des Massendurchflussreglers 25 ermittelt und entsprechend angepasste Betriebsanweisungen an die Saugpumpe 26 und den Massendurchflussregler 25 übermittelt. Die Saugpumpe 26 wird daraufhin beispielsweise mit einer veränderten Frequenz bzw. mit einer veränderten Drehzahl betrieben. Der Massendurchflussregler 25 wird nach dem Übermitteln der angepassten Betriebsanweisungen beispielsweise in einer veränderten Stellung eines Regelventils betrieben, so dass die Größe der effektiven Durchflussöffnung des Massendurchflussreglers 25 nach dem Erhalt der angepassten Betriebsanweisungen gegenüber der Größe der effektiven Durchflussöffnung vor dem Erhalt der angepassten Betriebsanweisungen verändert ist.

Die Saugpumpe 26 kann beispielsweise in einem Passivmodus als erster Arbeitsmodus so betrieben werden, dass sie in diesem Passivmodus inaktiv ist, also keinen Ansaugdruck erzeugt. In einem auf den Passivmodus folgenden Aktivmodus als zweiter Arbeitsmodus kann die Saugpumpe 26 beispielsweise so betrieben werden, dass sie im Aktivmodus aktiv ist und einen Ansaugdruck erzeugt, etwa in Höhe von 3 MPa. Die Höhe des erzeugten Ansaugdrucks im Aktivmodus kann alternativ einem definierten zeitlichen Verlauf folgen. Alternativ kann die Höhe des erzeugten Ansaugdruck im Aktivmodus einem zeitlichen Verlauf folgen, die von einer Bedienperson definiert werden kann. Die Höhe des erzeugten Ansaugdrucks im Aktivmodus kann beispielsweise einem zeitlichen Verlauf folgen, der im Wesentlichen einem logarithmischen oder exponentiellen Zusammenhang zwischen der Höhe des Ansaugdrucks und der Zeit entspricht. Die Höhe des erzeugten Ansaugdrucks im Aktivmodus kann beispielsweise auch einem zeitlichen Verlauf folgen, der eine Vielzahl von Abschnitten umfasst, wobei jeder Abschnitt ausgewählt sein kann aus insbesondere einem zeitlichen Verlauf, der im Wesentlichen einem linearen, quadratischen, logarithmischen oder exponentiellen Zusammenhang zwischen der Höhe des Ansaugdrucks und der Zeit entspricht.

Alternativ kann die Saugpumpe 26 im ersten Arbeitsmodus so betrieben werden, dass sie zunächst inaktiv ist, anschließend noch im ersten Arbeitsmodus aktiviert wird und dann im ersten Arbeitsmodus einen geringen Ansaugdruck erzeugt, beispielsweise in Höhe von 100 kPa. Alternativ kann die Saugpumpe 26 im ersten Arbeitsmodus so betrieben werden, dass sie bereits zu Beginn des ersten Arbeitsmodus aktiv ist und einen geringen Ansaugdruck, beispielsweise in Höhe von 100 kPa erzeugt. Die Höhe des erzeugten Ansaugdrucks im ersten Arbeitsmodus kann alternativ einem definierten zeitlichen Verlauf folgen. Alternativ kann die Höhe des erzeugten Ansaugdrucks im ersten Arbeitsmodus einem zeitlichen Verlauf folgen, der von einer Bedienperson definiert werden kann. Die Höhe des erzeugten Ansaugdrucks im ersten Arbeitsmodus kann beispielsweise einem zeitlichen Verlauf folgen, der im Wesentlichen einem logarithmischen oder exponentiellen Zusammenhang zwischen der Höhe des Ansaugdrucks und der Zeit entspricht. Die Höhe des erzeugten Ansaugdrucks im ersten Arbeitsmodus kann beispielsweise auch einem zeitlichen Verlauf folgen, der eine Vielzahl von Abschnitten umfasst, wobei jeder Abschnitt ausgewählt sein kann aus insbesondere einem zeitlichen Verlauf, der im Wesentlichen einem linearen, quadratischen, logarithmischen oder exponentiellen Zusammenhang zwischen der Höhe des Ansaugdrucks und der Zeit entspricht. Vorzugsweise ist der von der Saugpumpe 26 erzeugte maximale Ansaugdruck im ersten Arbeitsmodus geringer als der maximale Ansaugdruck im zweiten Arbeitsmodus. Es kann auch das Umschaltventil 23 entfallen und das Fluid im ersten und zweiten Arbeitsmodus durch die Saugpumpe 26 geführt werden, die entsprechend angesteuert oder geregelt wird. So kann beispielsweise im Passivmodus die Saugpumpe passiv sein oder deaktiviert bleiben und das Fluid durchströmen lassen und erst im Aktivmodus aktiviert sein.

Der Massendurchflussregler 25 kann alternativ nach der Messeinheit 24 und vor der Saugpumpe 26 angeordnet sein.

Die Zuleitung 20 kann eine erste Zuleitung, eine zweite Zuleitung und eine dritte Zuleitung umfassen, die mittels eines Zuleitungsumschaltventils mit der Messeinheit 24 fluidisch verbindbar sind. Ein Umschalten zwischen der ersten Zuleitung, der zweiten Zuleitung und der dritten Zuleitung erfolgt mittels des Zuleitungsumschaltventils analog zur Umschaltung zwischen den Ausleitungen 291 bis 293 mittels des Umschaltventils 23. Durch das Umschalten zwischen erster Zuleitung, zweiter Zuleitung und dritter Zuleitung können mehrere gefüllte Fluidspeicher mit der Fluidabführvorrichtung 2 gleichzeitig verbunden sein. Beispielsweise kann zunächst ein Fluid eines mit der ersten Zuleitung verbundenen Fluidspeichers durch die Fluidabführvorrichtung 2 abgeführt werden, anschließend nach Umschalten des Zuleitungsumschaltventils ein Fluid eines mit der zweiten Zuleitung verbundenen Fluidspeichers durch die Fluidabführvorrichtung 2 abgeführt werden und schließlich nach einem weiteren Umschalten des Zuleitungsumschaltventils ein Fluid eines mit der dritten Zuleitung verbundenen Fluidspeichers durch die Fluidabführvorrichtung 2 abgeführt werden.

Gemäß FIG 4 ist ein dritter Fluidspeicher 3 an einem Tankfahrzeug 7 angeordnet. Ein erster Fluidspeicher 9 einer Biogaserzeugungsanlage 8 ist mit einer Fluidabführvorrichtung 2 verbunden. Die Fluidabführvorrichtung 2 weist eine Steuereinheit 27 und eine Kommunikationseinheit 272 auf. Ferner ist die Fluidabführvorrichtung 2 mit dem zweiten Fluidspeicher 4 verbunden. Die Fluidabführvorrichtung 2 ist dazu ausgebildet oder konfiguriert, Füllstandwerte des ersten Fluidspeichers 8 und der zweiten Fluidspeichers 4 zu ermitteln. Die Kommunikationseinheit 272 übertragt die ermittelten Füllstandwerte an eine Kommunikationseinheit 57 eines Computers 5. Der Computer 5 ist in Entfernung zur Biosgaserzeugungsanlage 8 angeordnet, beispielsweise als Teil eines Kontrollsystems zur Überwachung von Fluidspeicherfüllständen. Der Computer 5 überwacht die Füllstände des ersten Fluidspeichers 8 und des zweiten Fluidspeichers 4. Wenn der Füllstand des Fluidspeichers 4 einen Schwellenwert übersteigt, so wird durch den Computer 5 ein Alarm ausgelöst und automatisch ein Bereitstellen eines dritten Fluidspeichers 3 ausgelöst. Gemäß FIG 4 wird der dritten Fluidspeicher 3 durch das Tankfahrzeug 7 zur Biogaserzeugungsanlage 8 befördert und dort für das Verbinden mit einer Ausleitung der Fluidabführvorrichtung 2 bereitgestellt.

### Bezugszeichenliste

- 2: Fluidabführvorrichtung
- 20: Zuleitung
- 23: Umschaltventil
- 24: Messeinheit
- 25: Massendurchflussregler
- 26: Saugpumpe
- 27: Steuereinheit
- 272: Kommunikationseinheit
- 28: Anzeige
- 29: Ausleitung
- 291: Erste Ausleitung
- 292: Zweite Ausleitung
- 293: Dritte Ausleitung
- 3: Fluidspeicher
- 30: Einlassventil
- 4: Fluidspeicher
- 40: Einlassventil
- 5: Computersystem
- 57: Kommunikationseinheit
- 7: Tankfahrzeug
- 8: Biomethan-Erzeugungsanlage
- 9: Fluidspeicher

## Patentansprüche

1. Verfahren zum Befüllen wenigstens eines Fluidspeichers umfassend:
(a) Bereitstellen eines ersten Fluidspeichers (9), insbesondere eines Biogasspeichers, der
(a1) wenigstens ein Auslassventil (99) aufweist sowie
(a2) mindestens ein Fluid oder Fluidgemisch mit Molekülen zumindest zweier unterschiedlicher chemischer Substanzen, insbesondere ein Biogasgemisch mit Methanmolekülen und Kohlendioxidmolekülen, umfasst und
(b) Bereitstellen eines zweiten Fluidspeichers (4), der wenigstens ein Einlassventil (40) aufweist;
(c) Bereitstellen einer Fluidabführvorrichtung (2) umfassend wenigstens eine Zuleitung (20), wenigstens eine Ausleitung (29), eine Steuereinheit (27) und eine Messeinheit (24) zur Erfassung von Messwerten einer oder mehrerer der folgenden Messgrößen:
- Druck innerhalb der Zuleitung (20) der Fluidabführvorrichtung (2),
- Temperatur innerhalb der Zuleitung (20) der Fluidabführvorrichtung (2),
- Massenstrom durch die Fluidabführvorrichtung (2); und
- Fluidkonzentration innerhalb der Zuleitung (20) der Fluidabführvorrichtung (2);
(d) Verbinden der Zuleitung (20) der Fluidabführvorrichtung (2) mit dem geschlossenen Auslassventil (99) des ersten Fluidspeichers (9);
(e) Verbinden der Ausleitung (29) der Fluidabführvorrichtung (2) mit dem Einlassventil (40) des zweiten Fluidspeichers (4); und
(f) Öffnen des Auslassventils (99) des ersten Fluidspeichers (9) und Ausströmen des Fluids aus dem ersten Fluidspeicher (9) durch das geöffnete Auslassventil (99) und durch die Fluidabführvorrichtung (2) in den zweiten Fluidspeicher (4);
(g) Erfassen von Messwerten der einen oder mehreren Messgrößen durch die Messeinheit (24);
(h) Empfangen eines den ein oder mehreren erfassten Messwerten entsprechenden Steuersignals durch die Steuereinheit (27); und
(i) Ermitteln eines dem Füllstand des zweiten Fluidspeichers (4) entsprechenden Füllstandwerts durch die Steuereinheit (27) auf Basis des Steuersignals.

2. Verfahren nach Anspruch 1, wobei der Füllstandwert des ersten Fluidspeichers (9) und/oder des zweiten Fluidspeichers (4) auf einer Anzeige der Fluidabführvorrichtung (2) angezeigt wird oder durch eine mit der Steuereinheit (27) verbundene Kommunikationseinheit des zweiten Fluidspeichers (4) drahtgebunden oder drahtlos an eine Empfangseinheit, insbesondere eine Empfangseinheit eines Computers oder Servers, übertragen wird.

3. Verfahren nach einem Anspruch 1 oder 2, wobei die Fluidabführvorrichtung (2) ferner eine Saugpumpe (26) und/oder einen Massendurchflussregler (25) umfasst.

4. Verfahren nach Anspruch 3, wobei die Steuereinheit (27) als Regelungseinheit ausgebildet oder konfiguriert ist, die eine oder mehrere der folgenden Regelgrößen regelt:
- Höhe eines von der Saugpumpe (26) erzeugten Ansaugdrucks;
- Frequenz oder Drehzahl der Saugpumpe (26); und
- Größe der effektiven Durchflussöffnung des Massendurchflussreglers (25).

5. Verfahren nach einem der vorhergehenden Ansprüche, wobei die Fluidabführvorrichtung (2) ferner umfasst:
- eine erste Ausleitung (291);
- eine zweite Ausleitung (292); und
- ein Umschaltventil (23) das ausgebildet oder konfiguriert ist, von der Steuereinheit (27) ein Umschaltsignal zum Schalten von einer ersten Stellung in eine zweite Stellung zu empfangen;
wobei das Verfahren ferner umfasst:
- Bereitstellen eines dritten Fluidspeichers (3), der wenigstens ein Einlassventil (30) aufweist;
- Verbinden der ersten Ausleitung (291) der Fluidabführvorrichtung (2) mit dem Einlassventil (40) des zweiten Fluidspeichers (4), wobei das Umschaltventil (23) in der ersten Stellung das Auslassventil (99) des ersten Fluidspeichers (9) mit dem Einlassventil (40) des zweiten Fluidspeichers (4) fluidisch verbindet und wobei das Umschaltventil (23) vor dem Öffnen des Auslassventils (99) des ersten Fluidspeichers (9) in der ersten Stellung vorliegt;
- Verbinden der zweiten Ausleitung (292) der Fluidabführvorrichtung (2) mit dem Einlassventil (30) des dritten Fluidspeichers (3), wobei das Umschaltventil (23) in der zweiten Stellung das Auslassventil (99) des ersten Fluidspeichers (9) mit dem Einlassventil (30) des dritten Fluidspeichers (3) fluidisch verbindet;
- Ermitteln eines dem Füllstand des zweiten Fluidspeichers (4) entsprechenden Füllstandwerts oberhalb eines ersten Schwellenwertes durch die Steuereinheit (27) auf Basis des Steuersignals;
- Erzeugen eines Umschaltsignals durch die Steuereinheit (27) zum Schalten von der ersten Stellung in die zweite Stellung;
- Empfangen des Umschaltsignals durch das Umschaltventil (23);
- Schalten des Umschaltventils (23) in die zweite Stellung, so dass das aus dem ersten Fluidspeicher (9) durch das geöffnete Auslassventil (99) ausströmende Fluid durch die Fluidabführvorrichtung (2) in den dritten Fluidspeicher (3) strömt, wenn der dem Füllstand des zweiten Fluidspeichers (4) entsprechende Füllstandwert oberhalb des ersten Schwellenwerts liegt.

6. Verfahren nach einem der vorhergehenden Ansprüche und nach Anspruch 2, wobei durch den drahtgebunden oder drahtlos an die Empfangseinheit des Computers oder des Servers übertragenen Füllstandwert das Bereitstellen eines weiteren Fluidspeichers ausgelöst wird, wenn der Füllstandwert einen zweiten Schwellenwert übersteigt.

7. Verfahren nach einem der vorhergehenden Ansprüche und nach Anspruch 3, wobei der erste Fluidspeicher (9) unter einem Speicherdruck aus einem Hochdruckbereich, insbesondere zwischen 2 und 10 MPa, steht, und in einem ersten Trennmodus die folgenden Verfahrensschritte an oder mit dem erste Fluidspeicher (9) durchgeführt werden:
- Öffnen des Auslassventils (99) des ersten Fluidspeichers (9) und Ausströmen des Fluids aus dem ersten Fluidspeicher (9) durch das geöffnete Auslassventil (99) in einem ersten Arbeitsmodus, insbesondere in einem Passivmodus ohne Ansaugdruck der Saugpumpe (26), bis der Speicherdruck einen Niederdruckbereich, insbesondere unterhalb von 2 MPa, erreicht und/oder solange das ausströmende Fluid überwiegend Methanmoleküle enthält,
- im Anschluss an den ersten Arbeitsmodus, insbesondere im Anschluss an den Passivmodus, Betreiben der Fluidabführvorrichtung (2) in einem zweiten Arbeitsmodus, insbesondere in einem Aktivmodus, mit folgenden Merkmalen:
- Erzeugung eines Ansaugdrucks an dem geöffneten Auslassventil (99) des ersten Fluidspeichers (9) mittels der Saugpumpe (26), und
- Abführen des Fluids aus dem ersten Fluidspeicher (9) durch die Fluidabführvorrichtung (2) durch den Ansaugdruck.

8. Fluidabführvorrichtung (2), insbesondere zur Verwendung in einem Verfahren nach einem der vorhergehenden Ansprüche, für ein Fluid oder Fluidgemisch, insbesondere für ein in einem Fluidspeicher gespeichertes Biogasgemisch,
wobei die Vorrichtung eine Zuleitung (20), wenigstens eine Ausleitung (29), eine Steuereinheit (27) und eine Messeinheit (24) zur Erfassung von Messwerten einer oder mehrerer der folgenden Messgrößen umfasst:
- Druck innerhalb der Zuleitung (20) der Fluidabführvorrichtung (2),
- Temperatur innerhalb der Zuleitung (20) der Fluidabführvorrichtung (2),
- Massenstrom durch die Fluidabführvorrichtung (2); und
- Fluidkonzentration innerhalb der Zuleitung (20) der Fluidabführvorrichtung (2).

9. Fluidabführvorrichtung (2) nach Anspruch 8, wobei die Fluidabführvorrichtung ferner eine Anzeige zur Anzeige eines Füllstandwerts mindestens eines mit der Fluidabführvorrichtung (2) verbundenen Fluidspeichers und/oder eine mit der Steuereinheit (27) verbundene Kommunikationseinheit, die so ausgebildet oder konfiguriert ist, dass der Füllstandwert drahtgebunden oder drahtlos an eine Empfangseinheit, insbesondere eine Empfangseinheit eines Computers oder Servers, übertragen werden kann.

10. Fluidabführvorrichtung (2) nach Anspruch 8 oder 9, wobei die Fluidabführvorrichtung (2) ferner eine Saugpumpe (26) umfasst, und wobei die Vorrichtung ausgebildet oder dazu geeignet ist, mittels der Saugpumpe (26) einen Ansaugdruck zu erzeugen und/oder wobei die Vorrichtung (2) ferner einen Massendurchflussregler (25) umfasst, und wobei die Vorrichtung ausgebildet oder dazu geeignet ist, mittels des Massendurchflussreglers (25) den Massenstrom durch die Fluidabführvorrichtung (2) auf einen Massenstromsollwert zu regeln, wobei der Massenstromsollwert insbesondere zeitabhängig ist.

11. Fluidabführvorrichtung (2) nach Anspruch 10, wobei die Höhe des Ansaugdrucks zeitabhängig ist und der Ansaugdruck von der Saugpumpe (26) entlang eines vorgegebenen oder vorgebbaren zeitlichen Verlaufs erzeugt wird.

12. Fluidabführvorrichtung (2) nach einem der Ansprüche 8 bis 11, wobei die Fluidabführvorrichtung (2) ferner umfasst:
- eine erste Ausleitung (291);
- eine zweite Ausleitung (292); und
- ein Umschaltventil (23), das ausgebildet oder konfiguriert ist, von der Steuereinheit (27) ein Umschaltsignal zum Schalten von einer ersten Stellung in eine zweite Stellung zu empfangen, wobei die Zuleitung (20) der Fluidabführvorrichtung (2) in der ersten Stellung mit der ersten Ausleitung (291) und die Zuleitung (20) der Fluidabführvorrichtung (2) in der zweiten Stellung mit der zweiten Ausleitung (292) fluidisch verbunden ist.

13. System, insbesondere zur Verwendung in einem Verfahren nach einem der Ansprüche 1 bis 7, umfassend eine Fluidabführvorrichtung (2) nach einem der Ansprüche 8 bis 12, einen erste Fluidspeicher (9) und einen zweiten Fluidspeicher (4).

14. System nach Anspruch 13, wobei der zweite Fluidspeicher (4) ein Fluid-Adsorptionsspeicher ist.

15. System nach Anspruch 13 oder 14, ferner umfassend einen dritten Fluidspeicher (3), wobei der dritte Fluidspeicher (3) insbesondere ein Fluid-Adsorptionsspeicher ist.
